(19) Europäisches Patentamt
European Patent Office
Office européen des brevets

(11) **EP 4 681 552 A1**

(12) **EUROPEAN PATENT APPLICATION**
published in accordance with Art. 153(4) EPC

(43) Date of publication:
**21.01.2026 Bulletin 2026/04**

(21) Application number: **24770221.0**

(22) Date of filing: **25.01.2024**

(51) International Patent Classification (IPC):
*A23L 27/14* (2016.01)          *A23L 5/10* (2016.01)
*A23L 5/20* (2016.01)          *A23L 23/00* (2016.01)
*A23L 27/00* (2016.01)          *A23L 27/10* (2016.01)

(52) Cooperative Patent Classification (CPC):
**A23L 5/10; A23L 5/20; A23L 23/00; A23L 27/00;
A23L 27/10; A23L 27/14**

(86) International application number:
**PCT/JP2024/002213**

(87) International publication number:
**WO 2024/190101 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.03.2023 JP 2023041820**

(71) Applicant: **House Foods Corporation
Higashi-Osaka-shi, Osaka 577-8520 (JP)**

(72) Inventor: **IWAHATA, Shinichi
Higashiosaka-shi, Osaka 577-8520 (JP)**

(74) Representative: **Global IP Europe
Patentanwaltskanzlei
Pfarrstraße 14
80538 München (DE)**

(54) **PROCESSED STAR ANISE, USE THEREFOR, AND PRODUCTION METHOD THEREFOR**

(57) The present invention provides processed star anise that retains a pleasant, refreshing aroma of star anise reminiscent of citrus with a reduced unpleasant odor similar to that of Illicium anisatum and a method for manufacturing the processed star anise. The processed star anise is prepared by processing star anise with superheated steam under a steam pressure of 0.2 to 0.5 MPa·G inclusive, an oxygen content higher than or equal to 2.4%, a temperature of 185 to 235 °C inclusive, and a processing time of 5 to 22 seconds inclusive. The method for manufacturing the processed star anise includes processing star anise with superheated steam under the above conditions.

**EP 4 681 552 A1**

**Description**

FIELD

The present invention relates to a processed star anise, use of a processed star anise, and a method for manufacturing a processed star anise.

BACKGROUND

Star anise is a spice obtained from dried fruits of Illicium verum. Star anise is a spice that has long been used for flavoring or adding a fragrance to a cooked food.

A method for processing a spice with superheated steam is known as a method for sterilizing a spice. A target item processed with steam heated to or above a saturation temperature (superheated steam) can be efficiently sterilized in a short time.

For example, Patent Literature 1 describes a processed spice prepared by processing an unground spice or a spice having a grain size greater than or equal to 840 μm with superheated steam under a steam pressure lower than 0.30 MPa·G, an oxygen content higher than 4.0% and lower than or equal to 8.0%, and a degree of superheat of 70 to 120 °C inclusive. Patent Literature 1 describes the superheated-steam process under the above conditions adding a savory aroma to the spice.

Patent Literature 2 describes processed cinnamon prepared by processing cinnamon with superheated steam under a steam pressure higher than or equal to 0.3 MPa·G and lower than 0.5 MPa·G, an oxygen content higher than or equal to 3.0%, a degree of superheat of 35 to 120 °C inclusive, and a processing time shorter than 120 seconds. Patent Literature 2 describes the processed cinnamon having less astringency unique to cinnamon and enhanced natural sweetness.

CITATION LIST

PATENT LITERATURE

Patent Literature 1: Japanese Unexamined Patent Application Publication No. 2016-013077
Patent Literature 2: WO2021/230338

BRIEF SUMMARY

TECHNICAL PROBLEM

Illicium anisatum is a plant belonging to the same genus Illicium as Illicium verum. The leaves or bark of Illicium anisatum has a unique aroma, and is used as a material of incense powder or joss sticks in Japan.

Star anise has a refreshing aroma reminiscent of citrus, and an odor similar to that of Illicium anisatum. The Illicium-anisatum-like odor of star anise may cause discomfort.

One or more aspects of the present invention are directed to processed star anise that retains a pleasant, refreshing aroma of star anise reminiscent of citrus with a reduced unpleasant odor similar to that of Illicium anisatum, a method for manufacturing the processed star anise, and use of the processed star anise.

SOLUTION TO PROBLEM

The inventors have noticed with surprise that processing star anise with superheated steam under specific conditions allows the processed star anise to retain a pleasant aroma of star anise with a reduced unpleasant odor similar to that of Illicium anisatum, and have conceived one or more embodiments of the present invention described below.

(1) Processed star anise prepared by processing star anise with superheated steam under a steam pressure of 0.2 to 0.5 MPa·G inclusive, an oxygen content higher than or equal to 2.4%, a temperature of 185 to 235 °C inclusive, and a processing time of 5 to 22 seconds inclusive.
(2) A composition for enhancing a flavor of Japanese pepper and/or Sichuan pepper, the composition comprising: the processed star anise according to (1).
(3) A soy-sauce-containing seasoning, comprising:

soy sauce; and

the processed star anise according to (1) in an amount of 0.01 to 1% by mass inclusive with respect to the soy sauce.

(4) A composition for reducing an off-odor of a food manufactured through heating under pressure in a container, the composition comprising:

the processed star anise according to (1).

(5) A method for manufacturing processed star anise, the method comprising:

processing star anise with superheated steam under a steam pressure of 0.2 to 0.5 MPa·G inclusive, an oxygen content higher than or equal to 2.4%, a temperature of 185 to 235 °C inclusive, and a processing time of 5 to 22 seconds inclusive.

(6) The method according to (5), wherein

the processing with the superheated steam is performed using a rotary valve device.

(7) A method for enhancing a flavor of Japanese pepper and/or Sichuan pepper, the method comprising:

mixing the processed star anise according to (1) and Japanese pepper and/or Sichuan pepper.

(8) Use of the processed star anise according to (1) for enhancing a flavor of Japanese pepper and/or Sichuan pepper.

(9) A food composition, comprising:

the processed star anise according to (1); and

Japanese pepper and/or Sichuan pepper.

(10) The processed star anise according to (1) for use in enhancing a flavor of Japanese pepper and/or Sichuan pepper.

(11) Use of the processed star anise according to (1) in manufacturing an additive for enhancing a flavor of Japanese pepper and/or Sichuan pepper.

(12) A method for reducing an off-odor of a food manufactured through heating under pressure in a container, the method comprising:

packing and hermetically sealing the processed star anise according to (1) together with a food material in a container; and

heating the container under pressure to manufacture a food heated under pressure.

(13) Use of the processed star anise according to (1) for reducing an off-odor of a food manufactured through heating under pressure in a container.

(14) A container-packed food heated under pressure, comprising:

a container; and

a food packed and hermetically sealed in the container, the food being mixed with the processed star anise according to (1).

(15) The processed star anise according to (1) for use in reducing an off-odor of a food manufactured through heating under pressure in a container.

(16) Use of the processed star anise according to (1) in manufacturing an additive for reducing an off-odor of a food manufactured through heating under pressure in a container.

The present application claims priority to Japanese Patent Application No. 2023-41820, the contents of which are incorporated herein.

All publications, patents, and patent applications cited herein are incorporated by reference in their entirety.

ADVANTAGEOUS EFFECTS

The processed star anise described herein retains a pleasant, refreshing aroma of star anise reminiscent of citrus with a reduced unpleasant odor similar to that of Illicium anisatum.

The method for manufacturing processed star anise described herein can manufacture processed star anise that retains the preferable characteristics.

When combined with Japanese pepper and/or Sichuan pepper, the processed star anise described herein or the composition described herein for enhancing a flavor of Japanese pepper and/or Sichuan pepper can enhance the flavor of the Japanese pepper and/or Sichuan pepper.

The soy-sauce-containing seasoning described herein is applicable to seasoning of various dishes including a meat dish.

The processed star anise described herein or the composition for use in reducing an off-odor of a food manufactured through heating under pressure in a container described herein can reduce an off-odor unique to a food manufactured through heating under pressure in a container, when packed and hermetically sealed in the container together with a food material and heated under pressure.

DETAILED DESCRIPTION

The present invention will now be described in more detail.

Star Anise

Star anise herein refers to a spice obtained from dried fruits of Illicium verum and may be in an unground form (whole) or in a ground form.

In one or more embodiments of the present invention, whole processed star anise may preferably be manufactured by processing whole star anise with superheated steam under specific conditions. When whole star anise is processed with superheated steam, loss of a pleasant aroma during the process can be reduced. The whole processed star anise processed with superheated steam may be used directly as a spice or may be ground into a ground material usable as a spice.

Method for Manufacturing Processed Star Anise

One or more other embodiments of the present invention are directed to a method for manufacturing processed star anise, comprising processing star anise with superheated steam under a steam pressure of 0.2 to 0.5 MPa·G inclusive, an oxygen content higher than or equal to 2.4%, a temperature of 185 to 235 °C inclusive, and a processing time of 5 to 22 seconds inclusive.

The method according to the present embodiment can manufacture processed star anise that retains a pleasant aroma of star anise (refreshing aroma reminiscent of citrus) with a reduced unpleasant odor similar to that of Illicium anisatum.

The process with superheated steam under the above conditions is effective as a sterilization process, and thus, the obtained processed star anise is usable directly without being sterilized further. To reduce a loss of an aroma caused by performing a sterilization process multiple times, unsterilized star anise may preferably be used as a material for the manufacturing method according to the present embodiment. As described above, star anise used as a material for the manufacturing method according to the present embodiment may preferably be whole star anise.

Using a steam pressure of 0.2 to 0.5 MPa·G inclusive in the present embodiment, a processed star anise with the pleasant aromatic characteristics can be obtained. MPa·G herein refers to a gage pressure. More specifically, X MPa·G refers to X MPa as a gage pressure. With a steam pressure lower than 0.2 MPa·G, an unpleasant Illicium-anisatum-like odor (Illicium anisatum odor) cannot be fully reduced. With a steam pressure higher than 0.5 MPa·G, a pleasant aroma of star anise is more likely to be lost.

The steam pressure in the present embodiment may be more preferably 0.3 to 0.5 MPa·G inclusive. With the steam pressure within this range, processed star anise with a strong pleasant aroma of star anise is obtained.

With a superheated-steam process at an oxygen content higher than or equal to 2.4% in the present embodiment, processed star anise that retains a pleasant aroma of star anise is obtained. At an oxygen content of lower than 2.4%, a pleasant aroma is more likely to be reduced, in addition to an unpleasant Illicium-anisatum-like odor. The oxygen content may preferably be 2.4 to 8.0% inclusive, or more preferably, 4.0 to 5.7% inclusive.

In the superheated-steam process described herein, oxygen comes from air contained in gaps in star anise or an oxygen-containing gas, such as air, provided in addition to superheated steam. An oxygen-containing gas provided in addition to superheated steam may be preliminarily mixed with superheated steam, and the obtained gas mixture may be used for processing star anise, or provided to star anise separately from superheated steam. Gaps in star anise refer to spaces between multiple pieces of star anise to be processed. In the superheated-steam process described herein, an oxygen content is calculated in the manner described below.

Each pressure in the calculation of the oxygen content described below refers to an absolute pressure, or more specifically, a value obtained by adding 0.1 MPa or the atmospheric pressure to the gage pressure.

When star anise is to be processed with a device that injects superheated steam into an enclosed space accommodating star anise (e.g., a rotary valve device), the oxygen content can be calculated with the formula below.

Oxygen content % = {(pressure of air contained in gap in star anise) × (oxygen content in air) + (pressure of provided oxygen-containing gas) × (oxygen content of provided oxygen-containing gas)}/(pressure of air contained in gap in star anise + pressure of provided oxygen-containing gas + pressure of injected steam).

When star anise is to be processed with a device that introduces star anise into a sealed pipe or a container containing superheated steam (e.g., an air-stream device), the oxygen content can be calculated with the formula below.

Oxygen content % = {(pressure of air contained in gap in star anise) × (oxygen content in air)/(pressure of air contained in gap in star anise + pressure of provided oxygen-containing gas + pressure of injected steam)} × {(volume of air contained in gap in star anise)/(volume of air contained in gap in star anise + volume of sealed pipe or container)} + {(pressure of provided oxygen-containing gas) × (oxygen content of provided oxygen-containing gas)/(pressure of provided oxygen-containing gas + pressure of injected steam)} × {(volume of sealed pipe or container)/(volume of air contained in gap in star anise + volume of sealed pipe or container)}.

When star anise is to be processed with a device that introduces star anise into an open space (e.g., a continuous device), the oxygen content can be calculated with the formula below.

Oxygen content % = (pressure of provided oxygen-containing gas) × (oxygen content of provided oxygen-containing gas)/(pressure of provided oxygen-containing gas + pressure of injected steam).

Any device is used for performing the superheated-steam process described herein. Examples of the device used for performing the superheated-steam process include a device that injects superheated steam into an enclosed space accommodating star anise to be processed (e.g., a rotary valve device), a device that introduces star anise to be processed into a sealed pipe or a container containing superheated steam (e.g., an air-stream device), and a device that introduces star anise to be processed into an open space (e.g., a continuous device). Among these devices, the device that injects superheated steam into an enclosed space accommodating star anise to be processed may preferably be used. With the device, aroma components are not lost due to air currents. More preferably, a rotary valve device may be used. The rotary valve device directly injects superheated steam into a cell receiving an object and sterilizes the object. The cell is defined by, for example, a rotary valve. The processing space (volume of the cell) is small for the volume of star anise to be processed. Air in the cell is thus less easily diluted by steam or pushed out of the processing space, and the oxygen content is thus easily adjustable by setting the pressure of superheated steam.

The process with superheated steam in the present embodiment is performed at a temperature of 185 to 235 °C inclusive. Thus, processed star anise with the above pleasant aromatic characteristics is obtained. At the temperature lower than 185 °C, an Illicium anisatum odor cannot be fully reduced. At the temperature higher than 235 °C, a pleasant aroma of star anise is easily lost. The temperature at which the process with superheated steam is performed may preferably be 190 to 230 °C inclusive, or more preferably, 195 to 220 °C inclusive.

The processing time with superheated steam in the present embodiment is 5 to 22 seconds inclusive. Thus, processed star anise with the above pleasant aromatic characteristics is obtained. With the processing time shorter than 5 seconds, an Illicium anisatum odor cannot be fully reduced. With the processing time longer than 22 seconds, a pleasant aroma of star anise is easily lost. The processing time with superheated steam may preferably be 6 to 20 seconds inclusive, or more preferably, 8 to 12 seconds inclusive.

The processed star anise obtained through the superheated-steam process may preferably be directly used for eating, but may more preferably be ground after the process. The grinding process may be performed with a grinder such as a stump grinder, a high-speed grinding mill, or a hammer mill. Ground star anise powder may be sorted through a sieve, and a fraction that cannot pass through the sieve may be collected and undergo another grinding process as appropriate.

Processed Star Anise

One or more other embodiments of the present invention are directed to processed star anise prepared by processing star anise with superheated steam under a steam pressure of 0.2 to 0.5 MPa·G inclusive, an oxygen content higher than or equal to 2.4%, a temperature of 185 to 235 °C inclusive, and a processing time of 5 to 22 seconds inclusive.

Processed star anise according to the present embodiment has pleasant aromatic characteristics that retain a pleasant aroma of star anise (refreshing aroma reminiscent of citrus) with a reduced unpleasant odor similar to that of Illicium anisatum.

The preferable aspects of the method for manufacturing processed star anise according to the present embodiment including the process with superheated steam are described above.

Composition for Enhancing Flavor of Japanese Pepper and/or Sichuan Pepper

Still another preferable embodiment of the present invention is directed to a composition for enhancing a flavor of Japanese pepper and/or Sichuan pepper, comprising the processed star anise.

When the composition according to the present embodiment is eaten together with Japanese pepper and/or Sichuan pepper, the flavor of the Japanese pepper and/or Sichuan pepper is enhanced. The composition according to the present embodiment can thus reduce the usage of costly Japanese pepper and costly Sichuan pepper.

To enhance the flavor of Japanese pepper and/or Sichuan pepper, the composition according to the present embodiment may be prepared by mixing, with respect to 100 parts by mass of Japanese pepper and/or Sichuan pepper, for example, 0.1 to 10 parts by mass inclusive, preferably, 0.5 to 5 parts by mass inclusive, or more preferably, 0.5 to 2 parts by mass inclusive of the processed star anise.

In the composition according to the present embodiment, the processed star anise may preferably be powder. The composition according to the present embodiment may be simply formed from the processed star anise or may contain another edible component. Examples of another edible component include, for example, a filler, an additive, and an antioxidant.

Enhancement of Flavor of Japanese Pepper and/or Sichuan Pepper with Processed Star Anise

Still another preferable embodiment of the present invention is directed to a method for enhancing a flavor of Japanese pepper and/or Sichuan pepper, the method comprising mixing the processed star anise and Japanese pepper and/or Sichuan pepper.

With the method according to the present embodiment, for example, 0.1 to 10 parts by mass inclusive, preferably, 0.5 to 5 parts by mass inclusive, or more preferably , 0.5 to 2 parts by mass inclusive of the processed star anise may be mixed with respect to 100 parts by mass of Japanese pepper and/or Sichuan pepper. With the method according to the present embodiment, the processed star anise may preferably be powder. With the method according to the present embodiment, the Japanese pepper and/or Sichuan pepper may be included in a food.

Still another preferable embodiment of the present invention is directed to

use of the processed star anise for enhancing a flavor of Japanese pepper and/or Sichuan pepper;
the processed star anise for use in enhancing the flavor of Japanese pepper and/or Sichuan pepper; or
use of the processed star anise in manufacturing an additive for enhancing a flavor of Japanese pepper and/or Sichuan pepper.

In these embodiments, for example, 0.1 to 10 parts by mass inclusive, preferably, 0.5 to 5 parts by mass inclusive, or more preferably, 0.5 to 2 parts by mass inclusive of the processed star anise may be mixed with respect to 100 parts by mass of Japanese pepper and/or Sichuan pepper. In these embodiments, the processed star anise may preferably be powder. In these embodiments, the Japanese pepper and/or Sichuan pepper may be included in a food.

Still another preferable embodiment of the present invention is directed to a food composition containing the processed star anise and Japanese pepper and/or Sichuan pepper.

In the food composition according to the present embodiment, for example, 0.1 to 10 parts by mass inclusive, preferably, 0.5 to 5 parts by mass inclusive, or more preferably, 0.5 to 2 parts by mass inclusive of the processed star anise may be mixed with respect to 100 parts by mass of Japanese pepper and/or Sichuan pepper. In the food composition according to the present embodiment, the processed star anise may preferably be powder. The food composition according to the present embodiment may be a seasoning composition that contains the processed star anise and the Japanese pepper and/or Sichuan pepper as main components, for example, which together constitute 90% by mass or more in total.

Soy-Sauce-Containing Seasoning

Still another preferable embodiment of the present invention is directed to a soy-sauce-containing seasoning including soy sauce, and the processed star anise in an amount of 0.01 to 1% by mass inclusive with respect to the soy sauce.

The soy-sauce-containing seasoning according to the present embodiment reduces the fatty odor of meat such as pork and is thus appropriately usable as a seasoning for various dishes including a meat dish.

As a component that reduces the fatty odor of meat, citrus or rosemary is known. However, citrus or rosemary has a strong aroma, and a soy-sauce-containing seasoning containing citrus or rosemary has a limited use. In contrast, the soy-sauce-containing seasoning containing a small amount, or more specifically, 0.01 to 1% by mass inclusive, of the processed star anise with respect to soy sauce can reduce the fatty odor of meat and has no smell unique to star anise and is thus widely usable.

The processed star anise mixed into the soy-sauce-containing seasoning according to the present embodiment may preferably be powder. The soy-sauce-containing seasoning according to the present embodiment may further include, in addition to soy sauce and the processed star anise, another component acceptable as a seasoning. Examples of the component acceptable as a seasoning include water, salt, mirin, sake, and an antioxidant.

Composition for Reducing Off-Odor of Food Manufactured through Heating under Pressure in Container

Still another preferable embodiment of the present invention is directed to a composition for reducing an off-odor of a food manufactured through heating under pressure in a container, the composition comprising the processed star anise.

Examples of the food manufactured through heating under pressure in a container include a retort-pouch food. A flexible, hermetic, heat-resistant container such as a retort pouch is usable as the container. Examples of the heating under pressure process include a process of heating a container in which a food material is packed and hermetically sealed under pressure at a temperature of 120 to 140 °C inclusive for 20 to 90 minutes inclusive. Examples of the food manufactured through heating under pressure in a container include a liquid or pasty food such as curry sauce, stew sauce, or demi-glace sauce.

The food manufactured through heating under pressure in a container such as a retort-pouch food may have an off-odor called a stuffy smell, when being eaten. The off-odor can be reduced by packing and hermetically sealing the composition according to the present embodiment together with a food material in the container, and heating the container under pressure. The off-odor can also be reduced without adding a smell unique to star anise by using a small amount of the composition according to the present embodiment by mixing, for example, 0.005 to 0.05% by mass inclusive, or preferably, 0.01 to 0.03% by mass inclusive of the processed star anise with respect to the total amount of the contents packed and hermetically sealed in the container, and by heating the container under pressure.

In the composition according to the present embodiment, the processed star anise may preferably be powder. The composition according to the present embodiment may simply contain the processed star anise, or may further contain another component acceptable as a food. Examples of the component acceptable as a food include a filler, an additive, and an antioxidant.

Reduction of Off-Odor of Food Manufactured through Heating under Pressure in Container by Processed Star Anise

Still another preferable embodiment of the present invention is directed to a method for reducing an off-odor of a food manufactured through heating under pressure in a container, the method comprising packing and hermetically sealing the processed star anise together with a food material in a container, and heating the container under pressure to manufacture a food heated under pressure.

With the method according to the present embodiment, the container may preferably be a flexible, hermetic, heat-resistant container such as a retort pouch. With the method according to the present embodiment, the food manufactured through heating under pressure in a container may be a retort-pouch food, or more preferably, a liquid or pasty food such as curry sauce, stew sauce, or demi-glace sauce. Examples of the food material packed in the container include the above food prepared in advance and a material to form the above food through heating under pressure. With the method according to the present embodiment, 0.005 to 0.05% by mass inclusive, or preferably, 0.01 to 0.03% by mass inclusive of the processed star anise is mixed with respect to the total amount of the contents, or in other words, the food material and the processed star anise, contained in the container. With the method according to the present embodiment, the processed star anise may preferably be powder. The heating under pressure process with the method according to the present embodiment may be a process of heating the container in which the food material is packed and hermetically sealed under pressure at a temperature of 120 to 140 °C inclusive for 20 to 90 minutes inclusive.

Still another preferable embodiment of the present invention is directed to:

use of the processed star anise for reducing an off-odor of a food manufactured through heating under pressure in a container;
the processed star anise for used in reducing an off-odor of a food manufactured through heating under pressure in a container; or
use of the processed star anise in manufacturing an additive for reducing an off-odor of a food manufactured through heating under pressure in a container.

In these embodiments, the container may preferably be a flexible, hermetic, heat-resistant container such as a retort pouch. In these embodiments, a food manufactured through heating under pressure in a container may be a retort-pouch food, or more preferably, a liquid or pasty food such as curry sauce, stew sauce, or demi-glace sauce. In these embodiments, 0.005 to 0.05% by mass inclusive, or preferably, 0.01 to 0.03% by mass inclusive of the processed star anise may be mixed with respect to the total amount of the contents of a food manufactured through heating under pressure in a container. In these embodiments, the processed star anise may preferably be powder. The heating under pressure process in these embodiments may be a process of heating the container in which the food material is packed and hermetically sealed under pressure at a temperature of 120 to 140 °C inclusive for 20 to 90 minutes inclusive.

Still another preferable embodiment of the present invention is directed to a container-packed food heated under pressure, comprising a container and a food packed and hermetically sealed in the container, the food being mixed with the processed star anise.

In the container-packed food according to the present embodiment, the container may preferably be a flexible, hermetic, heat-resistant container such as a retort pouch. The container-packed food according to the present embodiment may be a retort-pouch food, or more preferably, a liquid or pasty food such as curry sauce, stew sauce, or demi-glace sauce. In the container-packed food according to the present embodiment, 0.005 to 0.05% by mass inclusive, or preferably, 0.01 to 0.03% by mass inclusive of the processed star anise may be mixed with respect to the total amount of the contents in the container, or in other words, the food mixed with the processed star anise. In the container-packed food according to the present embodiment, the processed star anise may preferably be powder. The heating under pressure process with the method according to the present embodiment may be a process of heating the container in which the food material is packed and hermetically sealed under pressure at a temperature of 120 to 140 °C inclusive for 20 to 90 minutes inclusive.

Although the embodiments of the present invention will be described in detail below with reference to the working examples, the scope of the present invention is not limited to these working examples.

Working Examples

All the operations without specific temperatures were performed at room temperature (about 20 °C).

Experiment 1: Preparation of Processed Star Anise

Whole dried fruits of Illicium verum (star anise) were heated with superheated steam. As a superheated-steam sterilizer, a rotary-valve superheated-steam sterilizer (sterilizer SIRV exclusive for grains, manufactured by OKAWARA MFG. CO., LTD.) was used. The conditions for heating with superheated steam using the sterilizer are shown in the table below.

Star anise that has undergone heating is referred to as processed star anise.

The processed star anise that has undergone heating was dried by air blowing.

The dried processed star anise was ground, and powder (processed star anise powder) with a size that passes through a mesh of 500 μm was collected.

The processed star anise powder was packed and hermetically sealed in an aluminum pouch and left still for one day at 25 °C. A panel of three evaluators then conducted sensory evaluation in terms of Illicium anisatum-like odor (Illicium anisatum odor) and aroma emission of star anise. The evaluation criteria are as described below.

Illicium Anisatum Odor

A: No odor reminiscent of raw Illicium anisatum or joss sticks
B: Some but acceptable odor reminiscent of raw Illicium anisatum or joss sticks
F: Strong and unacceptable odor reminiscent of raw Illicium anisatum or joss sticks

Aroma Emission

A: Clearly perceivable emission of refreshing aroma reminiscent of citrus

B: Weakly perceivable emission of refreshing aroma reminiscent of citrus

F: No perceivable emission of refreshing aroma reminiscent of citrus

The heating conditions and the evaluation results are shown in the table below. For each evaluation item, the lowest rating among the three evaluators, with the rating order A > B > F, was used as the evaluation result for each working example and each comparative example.

[Table 1]

| | | WORKING EXAMPLE 1 | WORKING EXAMPLE 2 | WORKING EXAMPLE 3 | WORKING EXAMPLE 4 | WORKING EXAMPLE 5 | WORKING EXAMPLE 6 | WORKING EXAMPLE 7 |
|---|---|---|---|---|---|---|---|---|
| CONDITION | TEMPERATURE (°C) | 190 | 200 | 230 | 200 | 200 | 200 | 200 |
| | STEAM PRESSURE (MPa·G) | 0.3 | 0.3 | 0.3 | 0.2 | 0.5 | 0.3 | 0.3 |
| | OXYGEN CONTENT (%) | 4.8 | 4.1 | 2.5 | 3.2 | 5.6 | 4.1 | 4.1 |
| | TIME (S) | 10 | 10 | 10 | 10 | 10 | 6 | 20 |
| EVALUATION | ILLICIUM ANISATUM ODOR | B | A | A | B | A | B | A |
| | AROMA EMISSION | B | A | B | B | B | B | B |
| | COMMENT | SLIGHTLY UNCOOKED | GOOD | SLIGHTLY OVERCOOKED | SLIGHTLY UNCOOKED | SLIGHTLY BURNED | SLIGHTLY UNCOOKED | SLIGHTLY REDUCED AROMA |

[Table 2]

| CONDITION | | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 |
|---|---|---|---|---|---|---|---|
| CONDITION | TEMPERATURE (°C) | 180 | 240 | 200 | 200 | 200 | 200 |
| | STEAM PRESSURE (MPa·G) | 0.3 | 0.3 | 0.1 | 0.6 | 0.3 | 0.3 |
| | OXYGEN CONTENT (%) | 5.6 | 2.2 | 2.3 | 6.2 | 4.1 | 4.1 |
| | TIME (s) | 10 | 10 | 10 | 10 | 4 | 25 |
| EVALUATION | ILLICIUM ANISATUM ODOR | F | A | F | A | F | A |
| | AROMA EMISSION | B | F | B | F | A | F |
| | COMMENT | STRONG ILLICIUM ANISATUM ODOR | REDUCED AROMA | STRONG ILLICIUM ANISATUM ODOR | REDUCED AROMA | STRONG ILLICIUM ANISATUM ODOR | REDUCED AROMA |

Experiment 2-1: Enhancement of Flavor of Sichuan Pepper with Processed Star Anise Powder

In this experiment, 99 parts by mass of Sichuan pepper powder and 1 part by mass of the processed star anise powder in Working Examples 1 to 7 and Comparative Examples 1 to 6 were mixed. For comparison, powder simply containing Sichuan pepper was prepared.

An appropriate amount of the above mixture was added to a commercially available grilled eel with soy-based sauce, and a panel of three evaluators conducted sensory evaluation. The evaluation items and criteria are as described below.

Illicium Anisatum Odor

A: No odor reminiscent of raw Illicium anisatum or joss sticks

B: Some but acceptable odor reminiscent of raw Illicium anisatum or joss sticks

F: Strong and unacceptable odor reminiscent of raw Illicium anisatum or joss sticks

Aroma Emission

A: Clearly perceivable emission of Sichuan pepper aroma
B: Slightly more perceivable emission of Sichuan pepper aroma than the sample containing no processed star anise
F: No difference in emission of Sichuan pepper aroma from the sample containing no processed star anise, and no effect

Experiment 2-2: Enhancement of Flavor of Japanese Pepper with Processed Star Anise Powder

In this experiment, 0.3 g of the processed star anise powder in Working Examples 1 to 7 and Comparative Examples 1 to 6, 8.1 g of cumin powder, 25 g of Japanese pepper powder, 15 g of capsicum powder, 20 g of citrus unshiu peel powder, 10 g of turmeric powder, 30 g of monosodium glutamate, and 9 g of pepper powder were mixed to obtain a spice mixture. For comparison, a spice mixture containing no processed star anise powder in Working Examples 1 to 7 and Comparative Examples 1 to 6 was prepared.

To commercially available curry udon noodles, 2 g of the spice mixture was added, and a panel of three evaluators conducted sensory evaluation. The evaluation items and criteria are as described below.

Illicium Anisatum Odor

A: No odor reminiscent of raw Illicium anisatum or joss sticks
B: Some but acceptable odor reminiscent of raw Illicium anisatum or joss sticks
F: Strong and unacceptable odor reminiscent of raw Illicium anisatum or joss sticks

Aroma Emission

A: Clearly perceivable emission of Japanese pepper aroma
B: Slightly more perceivable emission of Japanese pepper aroma than the sample containing no processed star anise
F: No difference in emission of Japanese pepper aroma from the sample containing no processed star anise, and no effect

Experiment 3: Soy-Sauce-Containing Seasoning Containing Processed Star Anise Powder

In this experiment, 100 g of soy sauce, 100 g of sake, 100 g of mirin, and 0.03 g of the star anise powder in Working Examples 1 to 7 and Comparative Examples 1 to 6 were mixed and boiled to obtain a soy-sauce-containing seasoning. For comparison, a soy-sauce-containing seasoning containing no star anise powder in Working Examples 1 to 7 and Comparative Examples 1 to 6 was prepared.

First, 300 g of pork shoulder was cut into 3-centimeter cubes, and heated for two hours in an appropriate amount of hot water.

The heated pork shoulder was added to the soy-sauce-containing seasoning, heated, boiled, and then left still to cool overnight.

The pork with the seasoning was heated next day, and eaten by a panel of three evaluators for sensory evaluation. The evaluation items and criteria are as described below.

Illicium Anisatum Odor

A: No odor reminiscent of raw Illicium anisatum or joss sticks
B: Some but acceptable odor reminiscent of raw Illicium anisatum or joss sticks
F: Strong and unacceptable odor reminiscent of raw Illicium anisatum or joss sticks

Fatty Odor of Meat

A: Not perceivable
B: Some effect but small difference from the sample containing no processed star anise
F: No difference from the sample containing no processed star anise, and no effect

Experiment 4: Reduction of Off-Odor of Retort-Pouch Food with Processed Star Anise Powder

In this experiment, 33.5 g of lard and 37 g of wheat flour were stir-fried to be heated up to 120 °C. Into the mixture, 2 g of turmeric powder, 2 g of coriander powder, 1 g of fenugreek powder, 1 g of capsicum powder, and 2 g of cumin powder were then added and stir-fried for three minutes. Into the mixture, 6.5 g of granulated sugar, 7.5 g of salt, 7.5 g of another powdery seasoning (6.5 g of monosodium glutamate, 0.7 g of nucleic acid seasoning, and 0.3 g of caramel dye), and 0.1 g of the star anise powder in Working Examples 1 to 7 and Comparative Examples 1 to 6 were added, and mixed and heated to the temperature of 95 °C, and then cooled to be solidified into curry roux. For comparison, curry roux containing no star anise powder in Working Examples 1 to 7 and Comparative Examples 1 to 6 was prepared.

To the whole amount of the curry roux, 600 g of water was added, and the mixture was heated to 98 °C while being stirred to prepare curry sauce.

Into a retort pouch, 200 g of the curry sauce was packed and hermetically sealed, and sterilized under pressure at 120 °C for 60 minutes to obtain retort-pouch curry sauce.

The retort-pouch curry sauce was heated in hot water at 100 °C for five minutes one day after the sterilization process, and eaten by a panel of three evaluators for sensory evaluation. The evaluation items and criteria are as described below.

Illicium Anisatum Odor

A: No odor reminiscent of raw Illicium anisatum or joss sticks
B: Some but acceptable odor reminiscent of raw Illicium anisatum or joss sticks
F: Strong and unacceptable odor reminiscent of raw Illicium anisatum or joss sticks

Stuffy Smell

A: Not perceivable
B: Some effect but small difference from the sample containing no processed star anise
F: No difference from the sample containing no processed star anise, and no effect

Evaluation Results of Experiments 2-1, 2-2, 3, and 4

The evaluation results of experiments 2-1, 2-2, 3, and 4 are shown in the tables below. For each evaluation item, the lowest rating among the three evaluators, with the rating order A > B > F, was used as the evaluation result for each working example and each comparative example.

[Table 3]

| | | WORKING EXAMPLE 1 | WORKING EXAMPLE 2 | WORKING EXAMPLE 3 | WORKING EXAMPLE 4 | WORKING EXAMPLE 5 | WORKING EXAMPLE 6 | WORKING EXAMPLE 7 |
|---|---|---|---|---|---|---|---|---|
| EXPERIMENT 2-1 | ILLICIUM ANISATUM ODOR | B | A | A | B | A | B | A |
| | AROMA EMISSION | B | A | B | B | B | B | B |
| EXPERIMENT 2-2 | ILLICIUM ANISATUM ODOR | B | A | A | B | A | B | A |
| | AROMA EMISSION | B | A | B | B | B | B | B |
| EXPERIMENT 3 | ILLICIUM ANISATUM ODOR | B | A | A | B | A | B | A |
| | FATTY ODOR OF MEAT | B | A | B | B | B | B | B |
| EXPERIMENT 4 | ILLICIUM ANISATUM ODOR | B | A | A | B | A | B | A |
| | STUFFY SMELL | B | A | B | B | B | B | B |

[Table 4]

|  |  | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 |
|---|---|---|---|---|---|---|---|
| EXPERIMENT 2-1 | ILLICIUM ANISATUM ODOR | F | A | F | A | F | A |
|  | AROMA EMISSION | B | F | B | F | A | F |
| EXPERIMENT 2-2 | ILLICIUM ANISATUM ODOR | F | A | F | A | F | A |
|  | AROMA EMISSION | B | F | B | F | A | F |
| EXPERIMENT 3 | ILLICIUM ANISATUM ODOR | F | A | F | A | F | A |
|  | FATTY ODOR OF MEAT | B | F | B | F | A | F |
| EXPERIMENT 4 | ILLICIUM ANISATUM ODOR | F | A | F | A | F | A |
|  | STUFFY SMELL | B | F | B | F | A | F |

**Claims**

1. Processed star anise prepared by processing star anise with superheated steam under a steam pressure of 0.2 to 0.5 MPa·G inclusive, an oxygen content higher than or equal to 2.4%, a temperature of 185 to 235 °C inclusive, and a processing time of 5 to 22 seconds inclusive.

2. A method for enhancing a flavor of Japanese pepper and/or Sichuan pepper, the method comprising:
   mixing the processed star anise according to claim 1 and Japanese pepper and/or Sichuan pepper.

3. Use of the processed star anise according to claim 1 for enhancing a flavor of Japanese pepper and/or Sichuan pepper.

4. A food composition, comprising:

   the processed star anise according to claim 1; and
   Japanese pepper and/or Sichuan pepper.

5. A soy-sauce-containing seasoning, comprising:

   soy sauce; and
   the processed star anise according to claim 1 in an amount of 0.01 to 1% by mass inclusive with respect to the soy sauce.

6. A method for reducing an off-odor of a food manufactured through heating under pressure in a container, the method comprising:

   packing and hermetically sealing the processed star anise according to claim 1 together with a food material in a container; and
   heating the container under pressure to manufacture a food heated under pressure.

7. Use of the processed star anise according to claim 1 for reducing an off-odor of a food manufactured through heating under pressure in a container.

8. A container-packed food heated under pressure, comprising:

   a container; and
   a food packed and hermetically sealed in the container, the food being mixed with the processed star anise according to claim 1.

9. A method for manufacturing processed star anise, the method comprising:
   processing star anise with superheated steam under a steam pressure of 0.2 to 0.5 MPa·G inclusive, an oxygen content higher than or equal to 2.4%, a temperature of 185 to 235 °C inclusive, and a processing time of 5 to 22 seconds inclusive.

10. The method according to claim 9, wherein
    the processing with the superheated steam is performed using a rotary valve device.

**EP 4 681 552 A1**

## INTERNATIONAL SEARCH REPORT

International application No.

**PCT/JP2024/002213**

### A. CLASSIFICATION OF SUBJECT MATTER

*A23L 27/14*(2016.01)i; *A23L 5/10*(2016.01)i; *A23L 5/20*(2016.01)i; *A23L 23/00*(2016.01)i; *A23L 27/00*(2016.01)i; *A23L 27/10*(2016.01)i
FI: A23L27/14; A23L27/00 Z; A23L27/00 D; A23L5/10 Z; A23L5/20; A23L27/10 C; A23L23/00

According to International Patent Classification (IPC) or to both national classification and IPC

### B. FIELDS SEARCHED

Minimum documentation searched (classification system followed by classification symbols)

A23L27/14; A23L5/10; A23L5/20; A23L23/00; A23L27/00; A23L27/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); FSTA/AGRICOLA/BIOSIS/BIOTECHNO/CABA/CAplus/SCISEARCH/TOXCENTER (STN)

### C. DOCUMENTS CONSIDERED TO BE RELEVANT

| Category* | Citation of document, with indication, where appropriate, of the relevant passages | Relevant to claim No. |
|---|---|---|
| A | US 2013/0064957 A1 (MELWITZ, Dieter Werner) 14 March 2013 (2013-03-14) | 1-10 |
| A | JP 2003-169644 A (HOUSE FOODS CORPORATION) 17 June 2003 (2003-06-17) | 1-10 |
| A | JP 2022-073038 A (HOUSE FOODS CORPORATION) 17 May 2022 (2022-05-17) | 1-10 |
| A | JP 2016-013077 A (HOUSE FOODS CORPORATION) 28 January 2016 (2016-01-28) | 1-10 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

18

**INTERNATIONAL SEARCH REPORT**
Information on patent family members

International application No.

**PCT/JP2024/002213**

| Patent document cited in search report | | | Publication date (day/month/year) | Patent family member(s) | | | Publication date (day/month/year) |
|---|---|---|---|---|---|---|---|
| US | 2013/0064957 | A1 | 14 March 2013 | WO | 2011/147718 | A1 | |
| | | | | EP | 2575484 | A1 | |
| | | | | CN | 102905539 | A | |
| | | | | MX | 2012013631 | A | |
| | | | | ZA | 201208412 | B | |
| | | | | BR | 112012029529 | A | |
| JP | 2003-169644 | A | 17 June 2003 | CN | 1422542 | A | |
| JP | 2022-073038 | A | 17 May 2022 | (Family: none) | | | |
| JP | 2016-013077 | A | 28 January 2016 | (Family: none) | | | |

Form PCT/ISA/210 (patent family annex) (July 2022)

## REFERENCES CITED IN THE DESCRIPTION

**Patent documents cited in the description**

- JP 2016013077 A
- WO 2021230338 A
- JP 2023041820 A